# EUROPÄISCHE PATENTSCHRIFT

(11) **EP 4 176 361 B1**
(45) Veröffentlichungstag und Bekanntmachung des Hinweises auf die Patenterteilung: **01.05.2024**
(21) Anmeldenummer: 21737601.1
(22) Anmeldetag: 28.06.2021
(51) Int. Cl.: G06F 21/44, H04L 9/40

(54) **VERFAHREN UND SYSTEM ZUR INBETRIEBNAHME ODER VERWALTUNG EINER OFFLINE-STEUERVORRICHTUNG**
METHOD AND SYSTEM FOR STARTING UP OR MANAGING AN OFFLINE CONTROL DEVICE
PROCÉDÉ ET SYSTÈME DE DÉMARRAGE OU DE GESTION D'UN DISPOSITIF DE COMMANDE HORS LIGNE

(30) Priorität: 01.07.2020 DE 102020117287
(43) Veröffentlichungstag der Anmeldung: 10.05.2023
(73) Patentinhaber: Sphinx Electronics GmbH & Co KG, 79341 Kenzingen (DE)
(72) Erfinder: CHENG, Trong-Nghia, 79102 Freiburg (DE); EGGERT, Reinhard, 79227 Schallstadt (DE); BODECHON, Pascal, 77955 Ettenheim (DE)
(74) Vertreter: Kohler Schmid Möbus Patentanwälte
(86) Internationale Anmeldenummer: PCT/EP2021/067632
(87) Internationale Veröffentlichungsnummer: WO 2022/002823

(56) Entgegenhaltungen:
- CN-A- 109 271 757
- CN-B- 105 915 343

## Beschreibung

Die Erfindung betrifft ein Verfahren und ein System zur Inbetriebnahme und Verwaltung einer Offline-Steuervorrichtung, insbesondere Offline-Zutrittssteuervorrichtung, mittels einer Multi-Faktor-/ID-Authentifizierung.

Normalerweise sind vom Hersteller produzierte Terminals im Auslieferzustand ungeschützt und für Dritte (Kunden) zugänglich. Erst durch eine Multi-Faktor-Authentifizierung werden dem Terminal "Berechtigungen" zugewiesen, um eine geschützte/gesicherte (Erst)Inbetriebnahme zu ermöglichen. Ab diesem Zeitpunkt ist das Terminal gegen unberechtigten "Zugang" geschützt.

CN 109 271 757 A offenbart ein Verfahren zur Inbetriebnahme und Verwaltung einer Offline-Software mit folgenden Verfahrensschritten zur Erstinbetriebnahme der Software:
- Implementieren eines Authentifizierungsalgorithmus in einem Terminal, insbesondere durch den Terminalhersteller,
- Ausliefern des in einem Werkzustand befindlichen Terminals und eines insbesondere mobilen, ersten Speichermediums, in dem ein erster Sicherheitscode gespeichert ist, an einen Kunden, insbesondere durch den Anbieter der Software,
- Liefern eines, insbesondere vom Terminalhersteller, anhand des ersten Sicherheitscodes generierten, zweiten Sicherheitscodes an ein zweites Speichermedium, insbesondere an ein mobiles Endgerät, des Kunden, insbesondere durch den Anbieter der Software,
- Positionieren des ersten und des zweiten Speichermediums am Ort des Terminals durch einen Nutzer sowie Lesen des ersten und des zweiten Sicherheitscodes durch das Terminal und offline-Prüfen mittels des Terminals, ob die gelesenen ersten und zweiten Sicherheitscodes miteinander valid sind,
- nach positiver Prüfung Freischalten der Software durch das Terminal für die Verwaltung der Software durch den Nutzer, und
- Beenden des Erstinbetriebnahmemodus.

CN 105 915 343 B betrifft eine Offline-Aktivierung eines registrierten Benutzers mit folgenden Verfahrensschritten:
- eine Cloud erfasst einen vom Benutzer gesandten ersten Aktivierungscode und analysiert den ersten Aktivierungscode, um zu bestimmen, ob der Benutzer ein registrierter Benutzer ist,
- wenn ja, dann wird ein dem ersten Aktivierungscode entsprechender erster Verifikationscode gemäß einer Verifikationscodegenerierungsregel generiert und an den Benutzer gesandt,
- ein Client empfängt den vom Benutzer hochgeladenen ersten Verifikationscode und verifiziert den ersten Verifikationscode gemäß einer Verifikationsregel und, wenn die Verifikation erfolgreich ist, aktiviert den registrierten Benutzer.

Der Erfindung liegt die Aufgabe zugrunde, bei einer Offline-Steuervorrichtung, die also nicht an das Internet angeschlossen ist, sicherzustellen, dass nur eine hierzu berechtigte Person oder ein berechtigtes Gerät autorisiert wird.

Diese Aufgabe wird erfindungsgemäß durch ein Verfahren zur Inbetriebnahme und Verwaltung einer Offline-Steuervorrichtung, insbesondere Offline-Zutrittssteuervorrichtung, mittels einer Multi-Faktor-/ID-Authentifizierung, wobei die Steuervorrichtung eine Verwaltungssteuereinheit (z.B. Connect Modular Core) und ein die Verwaltungssteuereinheit freischaltendes Terminal aufweist, mit folgenden Verfahrensschritten zur Erstinbetriebnahme der Steuervorrichtung:
- Implementieren eines Multi-Faktor-/ID-Authentifizierungsalgorithmus in dem Terminal, insbesondere durch den Terminalhersteller,
- Ausliefern des in einem Werkzustand befindlichen Terminals und eines insbesondere mobilen, ersten Speichermediums (z.B. AKC-Transponder), in dem fälschungssicher und weltweit einzigartig eine SpeichermediumID (z.B. Transponder UID (Unique Identifier)) und ein erster Sicherheitscode (1.Faktor, z.B. Secure Token) gespeichert sind, an einen Kunden, insbesondere durch den Anbieter der Steuervorrichtung,
- Liefern eines, insbesondere vom Terminalhersteller, anhand des ersten Sicherheitscodes generierten, zweiten Sicherheitscodes (2.Faktor, z.B. Secure Signature, welche in einer Lizenzdatei hinterlegt (verpackt) ist) an ein zweites Speichermedium, insbesondere an ein mobiles Endgerät (z.B. Smartphone), des Kunden, insbesondere durch den Anbieter der Steuervorrichtung,
- Positionieren des ersten und des zweiten Speichermediums (z.B. AKC-Transponder und Smartphone) am Ort des Terminals durch einen Nutzer sowie Lesen der SpeichermediumID und des ersten und des zweiten Sicherheitscodes durch das Terminal und offline-Prüfen mittels des Multi-Faktor-Authentifizierungsalgorithmus des Terminals, ob die gelesenen ersten und zweiten Sicherheitscodes miteinander valid sind,
- nach positiver Multi-Faktor-Authentifizierungsprüfung Speichern der SpeichermediumID als BerechtigungsID und des ersten Sicherheitscodes in dem Terminal und ggf. anschließendes Freischalten der Verwaltungssteuereinheit durch das Terminal für die Verwaltung der Verwaltungssteuereinheit durch den Nutzer, und
- Beenden des Erstinbetriebnahmemodus, und, nach abgeschlossener Erstinbetriebnahme der Steuervorrichtung, mit folgenden Verfahrensschritten zur Verwaltung der Verwaltungssteuereinheit:
   - Positionieren zweier Speichermedien (z.B. AKC-Transponder und Smartphone) am Ort des Terminals durch einen Nutzer sowie Lesen einer SpeichermediumID und eines Sicherheitscodes des einen Speichermediums (z.B. AKC-Transponder) und eines Sicherheitscodes des anderen Speichermediums (z.B. Smartphone) durch das Terminal und offline-Prüfen mittels des Multi-Faktor-/ID-Authentifizierungsalgorithmus des Terminals, ob die gelesene SpeichermediumID und der gelesene Sicherheitscode des einen Speichermediums mit der im Terminal gespeicherten BerechtigungsID und mit dem im Terminal gespeicherten ersten Sicherheitscode übereinstimmen und die beiden gelesenen Sicherheitscodes miteinander valid sind,
   - nach positiver Multi-Faktor-/ID-Authentifizierungsprüfung Freischalten der Verwaltungssteuereinheit durch das Terminal für die Verwaltung der Verwaltungssteuereinheit durch den Nutzer, und
   - Beenden des Verwaltungsmodus.

Bevorzugt wird im Verwaltungsmodus erst nach positiver ID-Authentifizierungsprüfung die Multi-Faktor-Authentifizierungsprüfung durchgeführt.

Das erfindungsgemäße Verfahren sichert eine Kommunikation mit der Steuereinheit (z.B. Connect Modular Core), indem vor jedem Kommunikationsstart eine Multi-Faktor-Authentisierung (MFA) durchgeführt wird. Hierzu erfolgt im Vorfeld der eigentlichen Kundenkommunikation (Erstinbetriebnahme- oder Verwaltungsmodus) mit der Steuereinheit eine Prüfung durch mindestens zwei unterschiedliche Berechtigungsmerkmale mittels Sicherheitscodes und Speichermedien. Sowohl die Gültigkeit als auch die Anzahl der ersten Speichermedien (z.B. AKC (Autorisation Key Card)-Transponder) können vom Terminalhersteller beliebig eingestellt werden. Die Stärke des Verfahrens liegt darin, dass die Prüfung aller Komponenten "offline", also durch eine direkte Verbindung ohne Umweg über das Internet oder ein sonstiges Netzwerk, durchgeführt werden kann. Allein das Terminal validiert die Sicherheitscodes, die ausschließlich vom Terminalhersteller erzeugt werden. Der Käufer der Terminals, also der Kunde, hat keine Kenntnis von den Sicherheitscodes und kann diese daher nicht an Unbefugte weitergeben. Dies gewährleistet ein hohes Maß an Sicherheit.

Vorzugsweise wird der erste Sicherheitscode (z.B. Secure Token) auf einem dem Kunden mitgelieferten Transponder (z.B. RFID-Transponder) gespeichert, beispielsweise in Form eines Binärcodes mit mindestens 16 Bytes. Bei einem Binärcode mit 16 Bytes gibt es 2^{16*8} Möglichkeiten, einen Binärcode von 16 Bytes zu erzeugen, so dass ein solcher Binärcode ein hohes Maß an Sicherheit bietet.

Die Übertragung einer SpeichermediumID und/oder eines Sicherheitscodes eines am Ort des Terminals positionierten Speichermediums (z.B. AKC-Transponder, Smartphone) an das Terminal erfolgt bevorzugt drahtlos oder drahtgebunden, insbesondere mittels RFID oder Bluetooth, und zwar offline, also durch eine direkte Verbindung ohne Umweg über das Internet oder ein sonstiges Netzwerk.

Vorzugsweise wird der zweite Sicherheitscode (z.B. Secure Signature) als eine digitale Signatur des ersten Sicherheitscodes an ein mobiles Endgerät des Kunden, insbesondere an ein Smartphone, geliefert. Dazu kann vorteilhaft der zweite Sicherheitscode mittels eines privaten Schlüssels ("private key") des Terminalherstellers verschlüsselt werden und die Validität des verschlüsselten zweiten Sicherheitscodes vom Authentifizierungsalgorithmus des Terminals mittels eines öffentlichen Schlüssels ("public key") des Terminalherstellers überprüft werden. Zur Verschlüsselung kann beispielsweise ein Digital Signature Algorithm (DSA) oder Elliptic Curve Digital Signature Algorithm (ECDSA) und zur Erzeugung der digitalen Signatur ein in dem Federal Information Processing Standard (FIPS) oder Digital Signature Standard (DSS) definierter Algorithmus verwendet werden. Im Rahmen des DSA oder ECDSA werden der private und der öffentliche Schlüssel erzeugt.

Zum Generieren des zweiten Sicherheitscodes kann beispielsweise ein Hashwert des ersten Sicherheitscodes mit Hilfe einer kryptographischen Hashfunktion, die auf den ersten Sicherheitscode angewandt wird, bestimmt und dann der private Schlüssel des Terminalherstellers auf diesen Hashwert des ersten Sicherheitscodes angewandt werden, um den zweiten Sicherheitscode in Form einer digitalen Signatur des ersten Sicherheitscodes, wie z.B. in Form einer digitalen Lizenzdatei, zu erzeugen. Hashfunktionen oder Streuwertfunktionen dienen der Abbildung von Eingabewerten in Form von Zeichenfolgen beliebiger Länge auf Zeichenfolgen fester Länge, den Hashwerten, insbesondere natürliche Zahlen. Kryptographische Hashfunktionen sind insbesondere quasi kollisionsfrei, das heißt insbesondere, dass nur mit extrem geringer Wahrscheinlichkeit verschiedene Eingabewerte auf verschiedene gleiche Hashwerte abgebildet werden. Insbesondere wird eine Hashfunktion aus der Secure Hash Algorithm-2 (SHA-2)-Familie oder SHA-3-Familie verwendet.

Der zweite Sicherheitscode (z.B. Secure Signature) kann drahtlos, insbesondere mittels Bluetooth, von dem zweiten Speichermedium (z.B. Smartphone) an das Terminal übertragen werden, und zwar offline, also durch eine direkte Verbindung ohne Umweg über das Internet oder ein sonstiges Netzwerk.

Die Erfindung betrifft auch ein zum Durchführen des erfindungsgemäßen Verfahrens geeignetes System zur Inbetriebnahme und Verwaltung einer Offline-Steuervorrichtung, insbesondere Offline-Zutrittssteuervorrichtung, mittels einer Multi-Faktor-/ID-Authentifizierung, aufweisend:
- eine Steuervorrichtung, die eine Verwaltungssteuereinheit (z.B. Connect Modular Core) und ein die Verwaltungssteuereinheit freischaltendes Terminal mit mindestens einer Datenschnittstelle aufweist, wobei in dem Terminal ein Multi-Faktor-ZID-Authentifizierungsalgorithmus implementiert ist und mindestens eine BerechtigungsID und ein Sicherheitscode speicherbar sind,
- ein mobiles erstes Speichermedium (z.B. AKC-Transponder), in dem fälschungssicher eine SpeichermediumID (z.B. Transponder UID (Unique Identifier)) und ein erster Sicherheitscode (1.Faktor, z.B. Secure Token) gespeichert sind,
- ein mobiles zweites Speichermedium, insbesondere ein mobiles Endgerät (z.B. Smartphone), in dem ein anhand des ersten Sicherheitscodes generierter, zweiter Sicherheitscode (2.Faktor, z.B. Secure Signature, welche in einer Lizenzdatei hinterlegt (verpackt) ist) gespeichert ist, wobei der Multi-Faktor-/ID-Authentifizierungsalgorithmus für die Erstinbetriebnahme der Steuervorrichtung programmiert ist, bei zwei von einem Nutzer am Ort des Terminals positionierten Speichermedien (z.B. AKC-Transponder und Smartphone) eine SpeichermediumID und einen Sicherheitscode des einen Speichermediums und einen Sicherheitscode des anderen Speichermediums mittels der mindestens einen Datenschnittstelle zu lesen und offline zu prüfen, ob die gelesenen ersten und zweiten Sicherheitscodes miteinander valid sind und, wenn ja, die SpeichermediumID als BerechtigungsID und den ersten Sicherheitscode in dem Terminal zu speichern sowie den Erstinbetriebnahmemodus zu beenden, und wobei der Multi-Faktor-ZID-Authentifizierungsalgorithmus für die Verwaltung der Verwaltungssteuereinheit programmiert ist, bei zwei von einem Nutzer am Ort des Terminals positionierten Speichermedien (z.B. AKC-Transponder und Smartphone) eine SpeichermediumID und einen Sicherheitscode des einen Speichermediums und einen Sicherheitscode des anderen Speichermediums mittels der mindestens einen Datenschnittstelle zu lesen und offline zu prüfen, ob die gelesene SpeichermediumID und der gelesene Sicherheitscode des einen Speichermediums mit der im Terminal gespeicherten BerechtigungsID und mit dem im Terminal gespeicherten ersten Sicherheitscode übereinstimmen und die beiden gelesenen Sicherheitscodes miteinander valid sind, und, wenn ja, die Verwaltungssteuereinheit für die Verwaltung durch den Nutzer freizuschalten sowie den Verwaltungsmodus zu beenden.

Vorzugsweise ist der Multi-Faktor-/ID-Authentifizierungsalgorithmus programmiert, im Verwaltungsmodus erst nach positiver ID-Authentifizierungsprüfung die Multi-Faktor-Authentifizierungsprüfung durchzuführen und/oder im Erstinbetriebnahmemodus nach dem Speichern der BerechtigungsID die Verwaltungssteuereinheit für die Verwaltung der Verwaltungssteuereinheit durch den Nutzer freizuschalten.

Durch zwei unterschiedliche Sicherheitscodes, die dem Nutzer der Offline-Steuervorrichtung nicht bekannt sind, auf zwei unterschiedlichen Speichermedien sowie durch deren separate Überprüfung durch den Multi-Faktor-/ID-Authentifizierungsalgorithmus bietet das System ein hohes Maß an Sicherheit, selbst wenn einer der beiden Sicherheitscodes Dritten bekannt wird.

Das erste Speichermedium kann bevorzugt ein Transponder, insbesondere ein RFID-Transponder, sein, und das Terminal kann eine Datenschnittstelle, insbesondere eine RFID-Schnittstelle, zum drahtlosen Lesen von im Transponder gespeicherten Daten, wie z.B. des ersten Sicherheitscodes, aufweisen. RFID-Transponder ermöglichen einen direkten Datenaustausch auf kurze Distanz, der unabhängig von anderen Kommunikationskanälen wie dem Internet ist. RFID-Transponder zeichnen sich auch durch eine kompakte Ausgestaltung aus. Insbesondere werden "ISO/IEC 14443 A 1-4" RFID-Transponder verwendet.

Das zweite Speichermedium kann bevorzugt ein mobiles Endgerät des Kunden, insbesondere ein Smartphone, sein, und das Terminal kann eine Datenschnittstelle, insbesondere eine Bluetooth-Schnittstelle, zum drahtlosen Lesen von im mobilen Endgerät gespeicherten Daten, wie z.B. des zweiten Sicherheitscodes, aufweisen. Die Bluetooth-Schnittstelle ermöglicht einen direkten Datenaustausch auf kurze Distanz, der unabhängig von anderen Kommunikationskanälen wie dem Internet ist.

Vorzugsweise weist das erste Speichermedium (AKC) einen Copy/Clone, Schreibschutz, Leseschutz und Manipulationsschutz und/oder das zweite Speichermedium (Smartphone) einen Manipulationsschutz auf. Die Daten auf den Speichermedien können somit nicht durch unbefugte Personen geändert oder kopiert werden.

Besonders bevorzugt ist auf einem mobilen Endgerät (z.B. Smartphone) des Kunden eine mittels des zweiten Sicherheitscodes (z.B. Secure Signature) freigeschaltete App AKC (Autorisation Key Card) des Anbieters zur Verwaltung der Verwaltungssteuereinheit installiert.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:

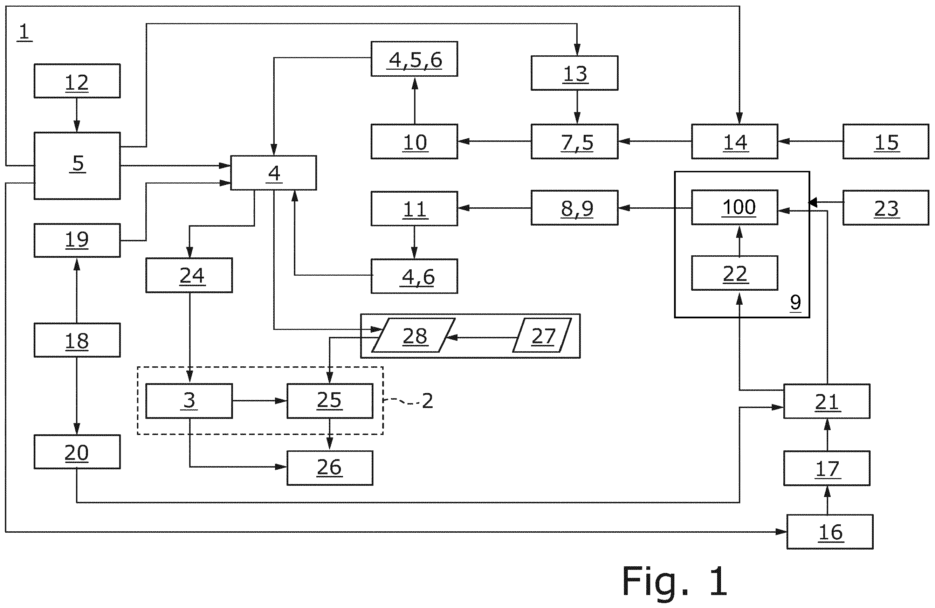

- Fig. 1: eine schematische Darstellung des erfindungsgemäßen Systems zur Inbetriebnahme oder Verwaltung einer Offline-Steuervorrichtung.

Das in **Fig. 1** gezeigte System **1** dient zur Inbetriebnahme und Verwaltung einer Offline-Steuervorrichtung **2**, wie z.B. einer Offline-Zutrittssteuervorrichtung, mittels einer Multi-Faktor-/ID-Authentifizierung.

Das System umfasst
- eine Inbetriebnahme-/Verwaltung-Steuereinheit **3**,
- ein die Steuereinheit 3 freischaltendes Terminal **4**, in dem ein ausschließlich dem Terminalhersteller bekannter erster Sicherheitscode (1.Faktor, z.B. Secure Token) **5** speicherbar und ein Multi-Faktor-/ID-Authentifizierungsalgorithmus **6** implementiert ist,
- ein mobiles erstes Speichermedium **7**, im Folgenden lediglich beispielhaft in Form eines Transponders, wie z.B. RFID-Transponders, in dem fälschungssicher und weltweit einzigartig eine SpeichermediumID (UID) des ersten Speichermediums 7 und der erste Sicherheitscode 5 gespeichert sind, und
- ein mobiles zweites Speichermedium **8**, im Folgenden lediglich beispielhaft in Form eines mobilen Endgeräts (z.B. Smartphone), in dem ein vom Terminalhersteller anhand des ersten Sicherheitscodes 5 generierter, zweiter Sicherheitscode **22** (2. Faktor, z.B. Secure Signature) gespeichert ist.

Das Terminal 4 weist sowohl eine Datenschnittstelle (z.B. RFID-Lesegerät) **10** zum drahtlosen Lesen der im Transponder 7 gespeicherten Daten (SpeichermediumID und erster Sicherheitscodes 5) als auch eine Datenschnittstelle (z.B. Bluetooth-Schnittstelle) **11** zum drahtlosen Lesen des im mobilen Endgerät 8 gespeicherten zweiten Sicherheitscodes 22 auf.

Ein Zufallsgenerator **12** des Systems 1 erstellt einen zufälligen ersten Sicherheitscode 5, der in einer Transponderproduktionseinheit **13** in den Transponder 7 gespeichert wird. Der Transponder 7 hat einen Schreib-/Leseschutz **14**, der mit einem nur dem Terminalhersteller bekannten, fälschungssicheren Copy/Clone- und Manipulationsschutz **15** geschützt ist. Bei diesem Copy/Clone- und Manipulationsschutz 15 kann es beispielsweise um eine von der Transponder-ID (UID) abhängige, individuelle Codierung handeln.

Mittels einer kryptographischen Hashfunktion bzw. eines Hashwert-Algorithmus **16** wird ein Hashwert **17** des ersten Sicherheitscodes 5 bestimmt. In einem Generator (z.B. ECDSA-Generator) **18** für asymmetrische Kryptographie werden ein öffentlicher Schlüssel ("public key") **19** und ein privater Schlüssel ("private key") **20** des Terminalherstellers erzeugt. Der öffentliche Schlüssels 19 ist im Terminal 4 gespeichert. In einer Berechnungseinheit **21** wird aus dem Hashwert 17 mittels des privaten Schlüssels 20 ein Datensatz, im Folgenden als digitale Sicherheitssignatur (Secure Signature) **22** bezeichnet, erstellt, die - z.B. in Form einer Lizenzdatei **9** inkl. Lizenz Optionen **100** - den zweiten Sicherheitscode 22 bildet. Der zweite Sicherheitscode 22 ist mit einem nur dem Terminalhersteller bekannten Manipulationsschutz **23** geschützt.

Die Erstinbetriebnahme der Offline-Steuervorrichtung 2 mittels der Multi-Faktor-/ID-Authentifizierung wird - im Folgenden lediglich stellvertretend am Beispiel eines Transponders 7 als erstes Speichermedium und eines mobilen Endgeräts 8 als zweites Speichermedium - beschrieben und weist folgende Verfahrensschritte auf:
- Implementieren des Multi-Faktor-ZID-Authentifizierungsalgorithmus 6 in dem Terminal 4 insbesondere durch den Terminalhersteller,
- Ausliefern des in einem Werkzustand befindlichen Terminals 4 und des Transponders 7, in dem fälschungssicher und weltweit einzigartig die Transponder-UID und der erste Sicherheitscode 5 (1.Faktor, z.B. Secure Token) gespeichert sind, an einen Kunden, insbesondere durch den Anbieter der Steuervorrichtung 2,
- Liefern des, insbesondere vom Terminalhersteller, anhand des ersten Sicherheitscodes 5 generierten, zweiten Sicherheitscodes 22 (2. Faktor, z.B. Secure Signature) an das mobile Endgerät 8 (z.B. Smartphone) des Kunden, insbesondere durch den Anbieter der Steuervorrichtung 2,
- Positionieren des Transponders 7 und des mobilen Endgeräts 8 am Ort des Terminals 4 durch einen Nutzer sowie Lesen der Transponders-UID und des ersten und des zweiten Sicherheitscodes 5, 22 durch das Terminal 4 und offline-Prüfen mittels des Multi-Faktor-Authentifizierungsalgorithmus 6 des Terminals 4, ob die gelesenen ersten und zweiten Sicherheitscodes 5, 22 miteinander valid sind,
- nach positiver Multi-Faktor-Authentifizierungsprüfung Speichern der Transponders-UID als BerechtigungsID und des ersten Sicherheitscodes 5 in dem Terminal 4 und ggf. anschließendes Freischalten der Verwaltungssteuereinheit 3 durch eine Freischaltung **24** des Terminals 4 für die Verwaltung der Verwaltungssteuereinheit 3 durch den Nutzer, und
- Beenden des Erstinbetriebnahmemodus.

Nach abgeschlossener Erstinbetriebnahme der Steuervorrichtung 2 werden folgende Verfahrensschritte zur Verwaltung der Verwaltungssteuereinheit 3 durchgeführt:
- Positionieren zweier Speichermedien (z.B. Transponder 7 und mobiles Endgerät 8) am Ort des Terminals 4 durch einen Nutzer sowie Lesen der Transponder-UID und eines Sicherheitscodes des Transponders 7 und eines Sicherheitscodes des mobilen Endgeräts 8 durch das Terminal 4 und offline-Prüfen mittels des Multi-Faktor-/ID-Authentifizierungsalgorithmus 6 des Terminals 4, ob die gelesene Transponder-UID und der gelesene Sicherheitscode des Transponders 7 mit der im Terminal 4 gespeicherten BerechtigungsID und mit dem im Terminal 4 gespeicherten ersten Sicherheitscode 5 übereinstimmen und die beiden gelesenen Sicherheitscodes miteinander valid sind,
- nach positiver Multi-Faktor-/ID-Authentifizierungsprüfung Freischalten der Verwaltungssteuereinheit 3 durch das Terminal 4 für die Verwaltung der Verwaltungssteuereinheit 3 durch den Nutzer, und
- Beenden des Verwaltungsmodus.

Die Steuervorrichtung 2 verwaltet die Berechtigung **25** z.B. eines Schließmechanismus **26** und kann den Schließmechanismus 26 öffnen und schließen. Zum Betätigen des Schließmechanismus 26 gibt ein Nutzer einen ihm mitgeteilten Zugangscode (z.B. Pin-Code) **27** in ein Lesegerät (z.B. Pin-Code-Lesegerät) **28** ein. Die Zutrittsberechtigung 25 überprüft die Berechtigung des eingegebenen Zugangscodes 27 und betätigt nur dann, wenn die Berechtigungsprüfung erfolgreich war, den Schließmechanismus 26.

## Patentansprüche

1. Verfahren zur Inbetriebnahme und Verwaltung einer Offline-Steuervorrichtung (2), insbesondere Offline-Zutrittssteuervorrichtung, mittels einer Multi-Faktor-/ID-Authentifizierung, wobei die Steuervorrichtung (2) eine Verwaltungssteuereinheit (3) und ein die Verwaltungssteuereinheit (3) freischaltendes Terminal (4) aufweist, mit folgenden Verfahrensschritten zur Erstinbetriebnahme der Steuervorrichtung (2):
- Implementieren eines Multi-Faktor-/ID-Authentifizierungsalgorithmus (6) in dem Terminal (4), insbesondere durch den Terminalhersteller,
- Ausliefern des in einem Werkzustand befindlichen Terminals (4) und eines insbesondere mobilen, ersten Speichermediums (7), in dem fälschungssicher und weltweit einzigartig eine SpeichermediumID und ein erster Sicherheitscode (5) gespeichert sind, an einen Kunden, insbesondere durch den Anbieter der Steuervorrichtung (2),
- Liefern eines, insbesondere vom Terminalhersteller, anhand des ersten Sicherheitscodes (5) generierten, zweiten Sicherheitscodes (22) an ein zweites Speichermedium (8), insbesondere an ein mobiles Endgerät, des Kunden, insbesondere durch den Anbieter der Steuervorrichtung (2),
- Positionieren des ersten und des zweiten Speichermediums (7, 8) am Ort des Terminals (4) durch einen Nutzer sowie Lesen der SpeichermediumID und des ersten und des zweiten Sicherheitscodes (5, 22) durch das Terminal (4) und offline-Prüfen mittels des Multi-Faktor-Authentifizierungsalgorithmus (6) des Terminals (4), ob die gelesenen ersten und zweiten Sicherheitscodes (5, 22) miteinander valid sind,
- nach positiver Multi-Faktor-Authentifizierungsprüfung Speichern der SpeichermediumID als BerechtigungsID und des ersten Sicherheitscodes (5) in dem Terminal (4) und ggf. anschließendes Freischalten der Verwaltungssteuereinheit (3) durch das Terminal (4) für die Verwaltung der Verwaltungssteuereinheit (3) durch den Nutzer, und
- Beenden des Erstinbetriebnahmemodus, und, nach abgeschlossener Erstinbetriebnahme der Steuervorrichtung (2), mit folgenden Verfahrensschritten zur Verwaltung der Verwaltungssteuereinheit (3):
- Positionieren zweier Speichermedien am Ort des Terminals (4) durch einen Nutzer sowie Lesen einer SpeichermediumID und eines Sicherheitscodes des einen Speichermediums und eines Sicherheitscodes des anderen Speichermediums durch das Terminal (4) und offline-Prüfen mittels des Multi-Faktor-/ID-Authentifizierungsalgorithmus (6) des Terminals (4), ob die gelesene SpeichermediumID und der gelesene Sicherheitscode des einen Speichermediums mit der im Terminal (4) gespeicherten BerechtigungsID und mit dem im Terminal (4) gespeicherten ersten Sicherheitscode (5) übereinstimmen und die beiden gelesenen Sicherheitscodes miteinander valid sind,
- nach positiver Multi-Faktor-/ID-Authentifizierungsprüfung Freischalten der Verwaltungssteuereinheit (3) durch das Terminal (4) für die Verwaltung der Verwaltungssteuereinheit (3) durch den Nutzer, und
- Beenden des Verwaltungsmodus.

2. Verfahren nach Anspruch 1, **dadurch gekennzeichnet, dass** im Verwaltungsmodus erst nach positiver ID-Authentifizierungsprüfung die Multi-Faktor-Authentifizierungsprüfung durchgeführt wird.

3. Verfahren nach Anspruch 1 oder 2, **dadurch gekennzeichnet, dass** die Übertragung einer SpeichermediumID und/oder eines Sicherheitscodes eines am Ort des Terminals (4) positionierten Speichermediums an das Terminal (4) drahtlos oder drahtgebunden, insbesondere mittels RFID oder Bluetooth, offline erfolgt.

4. Verfahren nach einem der vorhergehenden Ansprüche, **dadurch gekennzeichnet, dass** das erste Speichermedium (7) ein Transponder ist, der, insbesondere zusammen mit dem Terminal (4), an den Kunden geliefert wird.

5. Verfahren nach einem der vorhergehenden Ansprüche, **dadurch gekennzeichnet, dass** der erste Sicherheitscode (5) ein Binärcode, insbesondere mit mindestens 16 Bytes, ist.

6. Verfahren nach einem der vorhergehenden Ansprüche, **dadurch gekennzeichnet, dass** der zweite Sicherheitscode (22) als eine digitale Signatur des ersten Sicherheitscodes (5) an das zweite Speichermedium (8), insbesondere an ein mobiles Endgerät, geliefert und dort gespeichert wird.

7. Verfahren nach einem der vorhergehenden Ansprüche, **dadurch gekennzeichnet, dass** der zweite Sicherheitscode (22) mittels eines privaten Schlüssels, insbesondere des privaten Schlüssels des Terminalherstellers, verschlüsselt wird und dass die Validität des verschlüsselten zweiten Sicherheitscodes (22) vom Multi-Faktor-Authentifizierungsalgorithmus (6) des Terminals (4) mittels eines öffentlichen Schlüssels (19), insbesondere des öffentlichen Schlüssels des Terminalherstellers, überprüft wird.

8. Verfahren nach Anspruch 7, **dadurch gekennzeichnet, dass** ein Hashwert des ersten Sicherheitscodes (5) mit Hilfe einer kryptographischen Hashfunktion, die auf den ersten Sicherheitscode (5) angewandt wird, bestimmt wird und dass der private Schlüssel (20), insbesondere der private Schlüssel des Terminalherstellers, auf diesen Hashwert des ersten Sicherheitscodes (5) angewandt wird, um den zweiten Sicherheitscode (22) in Form einer digitalen Signatur des ersten Sicherheitscodes (5) zu erzeugen.

9. Verfahren nach einem der vorhergehenden Ansprüche, **dadurch gekennzeichnet, dass** im Falle eines mobilen Endgeräts des Kunden, welches das zweite Speichermedium (8) ausbildet, auf dem mobilen Endgerät eine mittels des zweiten Sicherheitscodes (22) freigeschaltete App des Anbieters zur Verwaltung der Verwaltungssteuereinheit (3) installiert wird.

10. System (1) zur Inbetriebnahme und Verwaltung einer Offline-Steuervorrichtung (2), insbesondere Offline-Zutrittssteuervorrichtung, mittels einer Multi-Faktor-/ID-Authentifizierung, aufweisend:
- eine Steuervorrichtung (2), die eine Verwaltungssteuereinheit (3) und ein die Verwaltungssteuereinheit (3) freischaltendes Terminal (4) mit mindestens einer Datenschnittstelle (10, 11) aufweist, wobei in dem Terminal (4) ein Multi-Faktor-/ID-Authentifizierungsalgorithmus (6) implementiert ist und mindestens eine BerechtigungsID und ein Sicherheitscode speicherbar sind,
- ein mobiles erstes Speichermedium (7), in dem fälschungssicher und weltweit einzigartig eine SpeichermediumID und ein erster Sicherheitscode (5) gespeichert sind,
- ein mobiles zweites Speichermedium (8), insbesondere ein mobiles Endgerät, in dem ein anhand des ersten Sicherheitscodes (5) generierter, zweiter Sicherheitscode (22) gespeichert ist,
wobei der Multi-Faktor-/ID-Authentifizierungsalgorithmus (6) für die Erstinbetriebnahme der Steuervorrichtung (2) programmiert ist, bei zwei von einem Nutzer am Ort des Terminals positionierten Speichermedien (7, 8) eine SpeichermediumID und einen Sicherheitscode (5) des einen Speichermediums (7) und einen Sicherheitscode (22) des anderen Speichermediums (8) mittels der mindestens einen Datenschnittstelle (10, 11) zu lesen und offline zu prüfen, ob die gelesenen ersten und zweiten Sicherheitscodes (5, 22) miteinander valid sind und, wenn ja, die SpeichermediumlD als BerechtigungsID und den ersten Sicherheitscode (5) in dem Terminal (4) zu speichern sowie den Erstinbetriebnahmemodus zu beenden, und
wobei der Multi-Faktor-/ID-Authentifizierungsalgorithmus (6) für die Verwaltung der Verwaltungssteuereinheit (3) programmiert ist, bei zwei von einem Nutzer am Ort des Terminals positionierten Speichermedien eine SpeichermediumID und einen Sicherheitscode des einen Speichermediums und einen Sicherheitscode des anderen Speichermediums mittels der mindestens einen Datenschnittstelle (10, 11) zu lesen und offline zu prüfen, ob die gelesene SpeichermediumID und der gelesene Sicherheitscode des einen Speichermediums mit der im Terminal (4) gespeicherten BerechtigungsID und mit dem im Terminal (4) gespeicherten ersten Sicherheitscode (5) übereinstimmen und die beiden gelesenen Sicherheitscodes (5, 22) miteinander valid sind, und, wenn ja, die Verwaltungssteuereinheit (3) für die Verwaltung durch den Nutzer freizuschalten sowie den Verwaltungsmodus zu beenden.

11. System nach Anspruch 10, **dadurch gekennzeichnet, dass** der Multi-Faktor-/ID-Authentifizierungsalgorithmus (6) programmiert ist, im Verwaltungsmodus erst nach positiver ID-Authentifizierungsprüfung die Multi-Faktor-Authentifizierungsprüfung durchzuführen.

12. System nach Anspruch 10 oder 11, **dadurch gekennzeichnet, dass** der Multi-Faktor-/ID-Authentifizierungsalgorithmus (6) programmiert ist, im Erstinbetriebnahmemodus nach dem Speichern der BerechtigungsID die Verwaltungssteuereinheit (3) für die Verwaltung der Verwaltungssteuereinheit (3) durch den Nutzer freizuschalten.

13. System nach einem der Ansprüche 10 bis 12, **dadurch gekennzeichnet, dass** das erste Speichermedium (7) ein Transponder, insbesondere ein RFID-Transponder, ist und dass das Terminal (4) eine Datenschnittstelle (10), insbesondere eine RFID-Schnittstelle, zum drahtlosen Lesen vom im Transponder gespeicherten Daten aufweist.

14. System nach einem der Ansprüche 10 bis 13, **dadurch gekennzeichnet, dass** das zweite Speichermedium (8) ein mobiles Endgerät des Kunden, insbesondere ein Smartphone, ist und dass das Terminal (7) eine Datenschnittstelle (11), insbesondere eine Bluetooth-Schnittstelle, zum drahtlosen Lesen von im mobilen Endgerät gespeicherten Daten aufweist.

15. System nach einem der Ansprüche 10 bis 14, **dadurch gekennzeichnet, dass** das erste Speichermedium (7) einen Copy/Clone, Schreibschutz, Leseschutz und Manipulationsschutz (15) und/oder das zweite Speichermedium (8) einen Manipulationsschutz (23) aufweisen.

16. System nach einem der Ansprüche 10 bis 15, **dadurch gekennzeichnet, dass** auf einem mobilen Endgerät (8) des Kunden eine mittels des zweiten Sicherheitscodes (22) freigeschaltete App des Anbieters zur Verwaltung der Verwaltungssteuereinheit (3) installiert ist.

## Claims

1. A method for starting up and managing an offline control device (2), in particular an offline access control device, by means of a multi-factor/ID authentication, wherein the control device (2) comprises a management control unit (3) and a terminal (4) which activates the management control unit (3), with the following method steps for the initial start-up of the control device (2):
- implementing, in particular by the terminal manufacturer, of a multi-factor/ID authentication algorithm (6) in the terminal (4),
- delivering, in particular by the provider of the control device (2), of the terminal (4), in a factory state, and an, in particular mobile, first storage medium (7), in which a storage medium ID and a first security code (5) are stored in a forgery-proof and globally unique manner, to a customer,
- delivering, in particular by the provider of the control device (2), of a second security code (22) generated, in particular by the terminal manufacturer, using the first security code (5), to a second storage medium (8), in particular to a mobile terminal device, of the customer,
- positioning, by a user, of the first and the second storage medium (7, 8) at the location of the terminal (4), and reading, by the terminal (4), of the storage medium ID and the first and the second security code (5, 22), and offline checking by means of the multi-factor authentication algorithm (6) of the terminal (4), whether the read first and second security codes (5, 22) are valid with one another,
- after a positive multi-factor authentication check, storing the storage medium ID as the authorization ID and the first security code (5) in the terminal (4), and, if necessary, subsequently activating the management control unit (3) by means of the terminal (4) for the management of the management control unit (3) by the user, and
- terminating the initial start-up mode,
and, on completion of the initial start-up of the control device (2), with the following method steps for managing the management control unit (3):
- positioning, by a user, of two storage media at the location of the terminal (4) and reading, by the terminal (4), of a storage medium ID and a security code of the one storage medium and a security code of the other storage medium, and offline checking by means of the multi-factor/ID authentication algorithm (6) of the terminal (4), whether the read storage medium ID and the read security code of the one storage medium match the authorization ID stored in the terminal (4) and the first security code (5) stored in the terminal (4), and the two read security codes are valid with one another,
- after a positive multi-factor/ID authentication check, activating the management control unit (3) by means of the terminal (4) for the management of the management control unit (3) by the user, and
- terminating the management mode.

2. The method as claimed in claim 1, **characterized in that** the multi-factor authentication check is performed in the management mode only after a positive ID authentication check.

3. The method as claimed in claim 1 or 2, **characterized in that** the transmission to the terminal (4) of a storage medium ID and/or a security code of a storage medium positioned at the location of the terminal (4) is performed offline in a wireless or wired manner, in particular by means of RFID or Bluetooth.

4. The method as claimed in one of the preceding claims, **characterized in that** the first storage medium (7) is a transponder which is delivered to the customer, in particular together with the terminal (4).

5. The method as claimed in one of the preceding claims, **characterized in that** the first security code (5) is a binary code, in particular comprising at least 16 bytes.

6. The method as claimed in one of the preceding claims, **characterized in that** the second security code (22) is supplied as a digital signature of the first security code (5) to the second storage medium (8), in particular to a mobile terminal device, and is stored there.

7. The method as claimed in one of the preceding claims, **characterized in that** the second security code (22) is encrypted by means of a private key, in particular the private key of the terminal manufacturer, and **in that** the validity of the encrypted second security code (22) is verified by the multi-factor authentication algorithm (6) of the terminal (4) by means of a public key (19), in particular the public key of the terminal manufacturer.

8. The method as claimed in claim 7, **characterized in that** a hash value of the first security code (5) is determined by means of a cryptographic hash function which is applied to the first security code (5), and **in that** the private key (20), in particular the private key of the terminal manufacturer, is applied to this hash value of the first security code (5) in order to generate the second security code (22) in the form of a digital signature of the first security code (5).

9. The method as claimed in one of the preceding claims, **characterized in that**, in the case of a mobile terminal device of the customer which forms the second storage medium (8), an app of the provider activated by means of the second security code (22) is installed on the mobile terminal device in order to manage the management control unit (3).

10. A system (1) for starting up and managing an offline control device (2), in particular an offline access control device, by means of a multi-factor/ID authentication, comprising:
- a control device (2) which comprises a management control unit (3) and a terminal (4) activating the management control unit (3) and having at least one data interface (10, 11), wherein a multi-factor/ID authentication algorithm (6) is implemented in the terminal (4) and at least one authorization ID and one security code are storable in the terminal (4),
- a mobile first storage medium (7) in which a storage medium ID and a first security code (5) are stored in a forgery-proof and globally unique manner,
- a mobile second storage medium (8), in particular a mobile terminal, in which a second security code (22) generated using the first security code (5) is stored,
wherein the multi-factor/ID authentication algorithm (6) for the initial start-up of the control device (2) is programmed, in the case of two storage media (7, 8) positioned by a user at the location of the terminal (4), to read a storage medium ID and a security code (5) of the one storage medium (7) and a security code (22) of the other storage medium (8) by means of the at least one data interface (10, 11), and to check offline whether the read first and second security codes (5, 22) are valid with one another and, if so, to store the storage medium ID as the authorization ID and the first security code (5) in the terminal (4) and to terminate the initial start-up mode, and
wherein the multi-factor/ID authentication algorithm (6) for the management of the management control unit (3) is programmed, in the case of two storage media positioned by a user at the location of the terminal (4), to read a storage medium ID and a security code of the one storage medium and a security code of the other storage medium by means of the at least one data interface (10, 11), and to check offline whether the read storage medium ID and the read security code of the one storage medium match the authorization ID stored in the terminal (4) and the first security code (5) stored in the terminal (4) and the two read security codes (5, 22) are valid with one another, and, if so, to activate the management control unit (3) for management by the user, and to terminate the management mode.

11. The system as claimed in claim 10, **characterized in that** the multi-factor/ID authentication algorithm (6) is programmed to perform the multi-factor authentication check in the management mode only after a positive ID authentication check.

12. The system as claimed in claim 10 or 11, **characterized in that** the multi-factor/ID authentication algorithm (6) is programmed to activate the management control unit (3) for the management of the management control unit (3) by the user in the initial start-up mode after the storage of the authorization ID.

13. The system as claimed in one of claims 10 to 12, **characterized in that** the first storage medium (7) is a transponder, in particular an RFID transponder, and **in that** the terminal (4) includes a data interface (10), in particular an RFID interface, for the wireless reading of data stored in the transponder.

14. The system as claimed in one of claims 10 to 13, **characterized in that** the second storage medium (8) is a mobile terminal device of the customer, in particular a smartphone, and **in that** the terminal (4) has a data interface (11), in particular a Bluetooth interface, for the wireless reading of data stored in the mobile terminal device.

15. The system as claimed in one of claims 10 to 14, **characterized in that** the first storage medium (7) has a copy/clone, write protection, read protection and manipulation protection (15), and/or the second storage medium (8) includes a manipulation protection (23).

16. The system as claimed in one of claims 10 to 15, **characterized in that** an app of the provider activated by means of the second security code (22) is installed on a mobile terminal (8) of the customer in order to manage the management control unit (3).

## Revendications

1. Procédé de mise en service et de gestion d'un dispositif (2) de commande hors-ligne, en particulier d'un dispositif de commande d'accès hors-ligne au moyen d'une authentification multifactorielle d'identifiants, ledit dispositif de commande (2) étant muni d'une unité (3) de commande de gestion et d'un terminal (4) provoquant l'activation de ladite unité (3) de commande de gestion, comprenant les étapes opératoires suivantes, dédiées à la mise en service initiale dudit dispositif de commande (2) :
- intégration dans le terminal (4), notamment effectuée par le fabricant dudit terminal, d'un algorithme (6) d'authentification multifactorielle d'identifiants,
- livraison à un client, notamment effectuée par le fournisseur du dispositif de commande (2), du terminal (4) en condition d'usine et d'un premier moyen de stockage (7) notamment mobile, dans lequel sont stockés, de manière infalsifiable et avec unicité mondiale, un identifiant de moyen de mémorisation et un premier code de sécurité (5),
- délivrance, notamment effectuée par ledit fournisseur du dispositif de commande (2), d'un second code de sécurité (22), notamment engendré par ledit fabricant du terminal sur la base dudit premier code de sécurité (5), à un second moyen de stockage (8) se présentant, en particulier, comme un périphérique mobile du client,
- positionnement, effectué par un utilisateur, desdits premier et second moyens de stockage (7, 8) à l'emplacement du terminal (4), ainsi que lecture de l'identifiant de moyen de mémorisation et des premier et second codes de sécurité (5, 22), effectuée par ledit terminal (4), et contrôle hors-ligne, au moyen de l'algorithme (6) d'authentification multifactorielle d'identifiants dudit terminal (4), visant à établir si lesdits premier et second codes de sécurité lus (5, 22) sont réciproquement valides,
- après contrôle positif de l'authentification multifactorielle d'identifiants, stockage, dans ledit terminal (4), dudit premier code de sécurité (5) et dudit identifiant de moyen de mémorisation en tant qu'identifiant d'habilitation et, le cas échéant, activation consécutive de l'unité (3) de commande de gestion, par ledit terminal (4), en vue du management de ladite unité (3) de commande de gestion effectué par l'utilisateur, et
- cessation du mode mise en service initiale
et, une fois achevée la mise en service initiale du dispositif de commande (2), en exécutant les étapes opératoires suivantes, dédiées au management de l'unité (3) de commande de gestion :
- positionnement, effectué par un utilisateur, de deux moyens de stockage à l'emplacement du terminal (4), ainsi que lecture, effectuée par ledit terminal (4), d'un identifiant de moyen de mémorisation et d'un code de sécurité de l'un desdits moyens de stockage, et d'un code de sécurité de l'autre moyen de stockage, et contrôle hors-ligne, au moyen de l'algorithme (6) d'authentification multifactorielle d'identifiants dudit terminal (4), visant à établir si l'identifiant de moyen de mémorisation lu, et le code de sécurité lu de l'un desdits moyens de stockage, sont en coïncidence mutuelle avec l'identifiant d'habilitation stocké dans le terminal (4) et avec le premier code de sécurité (5) stocké dans ledit terminal (4), et si les deux codes de sécurité lus sont réciproquement valides,
- après contrôle positif de l'authentification multifactorielle d'identifiants, activation de l'unité (3) de commande de gestion, par ledit terminal (4), en vue du management de ladite unité (3) de commande de gestion effectué par l'utilisateur, et
- cessation du mode gestion.

2. Procédé selon la revendication 1, **caractérisé par le fait que** le contrôle d'authentification multifactorielle est exécuté, dans le mode gestion, uniquement après contrôle positif de l'authentification d'identifiants.

3. Procédé selon la revendication 1 ou 2, **caractérisé par le fait que** la transmission, au terminal (4), d'un identifiant de moyen de mémorisation, et/ou d'un code de sécurité d'un moyen de mémorisation positionné à l'emplacement dudit terminal (4), a lieu en mode sans fil ou filaire, en particulier au moyen d'une identification par radiofréquence ou de la technologie *Bluetooth.*

4. Procédé selon l'une des revendications précédentes, **caractérisé par le fait que** le premier moyen de stockage (7) est un transpondeur qui, en particulier, est remis au client conjointement au terminal (4).

5. Procédé selon l'une des revendications précédentes, **caractérisé par le fait que** le premier code de sécurité (5) est un code binaire comportant au moins 18 bytes en particulier.

6. Procédé selon l'une des revendications précédentes, **caractérisé par le fait que** le second code de sécurité (22) est délivré, en tant que signature numérique du premier code de sécurité (5), au second moyen de stockage (8) et notamment à un périphérique mobile, dans lequel il est stocké.

7. Procédé selon l'une des revendications précédentes, **caractérisé par le fait que** le second code de sécurité (22) est crypté au moyen d'une clé privée, en particulier de la clé privé du fabricant du terminal ; et **par le fait que** la validité dudit second code de sécurité crypté (22) est contrôlée par l'algorithme (6) d'authentification multifactorielle dudit terminal (4) au moyen d'une clé publique (19), notamment de la clé publique dudit fabricant du terminal.

8. Procédé selon la revendication 7, **caractérisé par le fait qu'**une valeur de hachage du premier code de sécurité (5) est déterminée à l'aide d'une fonction de hachage cryptographique appliquée audit premier code de sécurité (5) ; et **par le fait que** la clé privée (20), en particulier la clé privée du fabricant du terminal, est mise en oeuvre sur cette valeur de hachage dudit premier code de sécurité (5) en vue d'engendrer le second code de sécurité (22) sous la forme d'une signature numérique dudit premier code de sécurité (5).

9. Procédé selon l'une des revendications précédentes, **caractérisé par le fait que**, dans le cas où un périphérique mobile du client matérialise le second moyen de stockage (8), une application du fournisseur, activée au moyen du second code de sécurité (22), est installée sur ledit périphérique mobile en vue du management de l'unité (3) de commande de gestion.

10. Système (1) dévolu à la mise en service et à la gestion d'un dispositif (2) de commande hors-ligne, en particulier d'un dispositif de commande d'accès hors-ligne au moyen d'une authentification multifactorielle d'identifiants, comprenant :
- un dispositif de commande (2) équipé d'une unité (3) de commande de gestion et d'un terminal (4) qui provoque l'activation de ladite unité (3) de commande de gestion, et est muni d'au moins un interface de données (10, 11), sachant qu'un algorithme (6) d'authentification multifactorielle d'identifiants est intégré dans ledit terminal (4), et qu'au moins un identifiant d'habilitation et un code de sécurité peuvent y être stockés,
- un premier moyen mobile de stockage (7) dans lequel un identifiant de moyen de mémorisation et un premier code de sécurité (5) sont stockés de manière infalsifiable, et avec unicité mondiale,
- un second moyen mobile de stockage (8), en particulier un périphérique mobile du client dans lequel est stocké un second code de sécurité (22) engendré sur la base dudit premier code de sécurité (5),
sachant que l'algorithme (6) d'authentification multifactorielle d'identifiants affecté à la mise en service initiale du dispositif de commande (2) est programmé, en présence de deux moyens de stockage (7, 8) positionnés par un utilisateur à l'emplacement du terminal, pour lire un identifiant de moyen de mémorisation et un code de sécurité (5) de l'un (7) desdits moyens de stockage et un code de sécurité (22) de l'autre moyen de stockage (8), à l'aide de l'interface de données (10, 11) à présence minimale, et pour contrôler hors-ligne si lesdits premier et second codes de sécurité lus (5, 22) sont réciproquement valides et, dans l'affirmative, pour stocker, dans le terminal (4), ledit premier code de sécurité (5) et ledit identifiant de moyen de mémorisation en tant qu'identifiant d'habilitation, ainsi que pour mettre un terme au mode mise en service initiale, et
sachant que ledit algorithme (6) d'authentification multifactorielle d'identifiants affecté au management de l'unité (3) de commande de gestion est programmé, en présence de deux moyens de stockage positionnés par un utilisateur à l'emplacement du terminal, pour lire un identifiant de moyen de mémorisation et un code de sécurité de l'un desdits moyens de stockage et un code de sécurité de l'autre moyen de stockage, à l'aide dudit interface de données (10, 11) à présence minimale, et pour contrôler hors-ligne si l'identifiant de moyen de mémorisation lu, et le code de sécurité lu de l'un desdits moyens de stockage, sont en coïncidence mutuelle avec l'identifiant d'habilitation stocké dans le terminal (4) et avec le premier code de sécurité (5) stocké dans ledit terminal (4), et si les deux codes de sécurité lus (5, 22) sont réciproquement valides et, dans l'affirmative, pour activer ladite unité (3) de commande de gestion en vue de la gestion effectuée par l'utilisateur, ainsi que pour mettre un terme au mode gestion.

11. Système selon la revendication 10, **caractérisé par le fait que** l'algorithme (6) d'authentification multifactorielle d'identifiants est programmé pour exécuter le contrôle d'authentification multifactorielle, dans le mode gestion, uniquement après contrôle positif de l'authentification d'identifiants.

12. Système selon la revendication 10 ou 11, **caractérisé par le fait que** l'algorithme (6) d'authentification multifactorielle d'identifiants est programmé pour activer l'unité (3) de commande de gestion en vue du management de ladite l'unité (3) de commande de gestion effectué par l'utilisateur, dans le mode mise en service initiale, à l'issue du stockage de l'identifiant d'habilitation.

13. Système selon l'une des revendications 10 à 12, **caractérisé par le fait que** le premier moyen de stockage (7) est un transpondeur, en particulier un transpondeur d'identification par radiofréquence ; et **par le fait que** le terminal (4) est doté d'un interface de données (10), en particulier d'un interface de données à identification par radiofréquence affecté à la lecture, sans fil, de données stockées dans ledit transpondeur.

14. Système selon l'une des revendications 10 à 13, **caractérisé par le fait que** le second moyen de stockage (8) est un périphérique mobile du client, en particulier un ordiphone ; et **par le fait que** le terminal (4) est pourvu d'un interface de données (11), en particulier d'un interface *Bluetooth* affecté à la lecture, sans fil, de données stockées dans ledit périphérique mobile.

15. Système selon l'une des revendications 10 à 14, **caractérisé par le fait que** le premier moyen de stockage (7) est muni d'un copieur-duplicateur, d'une protection d'écriture, d'une protection de lecture et d'une protection (15) contre les manipulations, et/ou le second moyen de stockage (8) est doté d'une protection (23) contre les manipulations.

16. Système selon l'une des revendications 10 à 15, **caractérisé par le fait qu'**une application du fournisseur, activée au moyen du second code de sécurité (22), est installée sur un périphérique mobile (8) du client en vue du management de l'unité (3) de commande de gestion.
